# EUROPEAN PATENT APPLICATION

(11) **EP 4 468 615 A1**
(43) Date of publication of application: **27.11.2024**
(21) Application number: 24176943.9
(22) Date of filing: 21.05.2024
(51) Int. Cl.: H04B 5/43, H04B 5/24, H04B 5/79

(54) **ENROLLMENT ASSISTANCE DEVICE WITH INDUCTIVE COILS, BIOMETRIC SYSTEM AND ENROLLMENT METHOD**

(30) Priority: 23.05.2023 SE 2350626
(71) Applicant: Fingerprint Cards Anacatum IP AB, 411 19 Göteborg (SE)
(72) Inventor: HAMMERSBERG, Johan, 448 36 FLODA (SE); ASAD, Muhammad, 463 71 LÖDÖSE (SE)
(74) Representative: Kransell & Wennborg KB

(57) **Abstract**

An enrollment assistance device (11) comprising a carrier (15) with a first surface portion (17) for a user device (13), and a second surface portion (19) for a contactless smartcard (1); first and second inductive coils (20, 32) and an electrical conductor (34) encircling the inductive coils. The inductive coils are configured to form a first wireless power transfer link with the wireless power transfer arrangement of the user device when the user device is arranged on the first surface portion of the carrier, and a second wireless power transfer link with the wireless power transfer arrangement of the contactless smartcard when the contactless smartcard is arranged on the second surface portion of the carrier.

## Description

### Field of the Invention

The present invention relates to an enrollment assistance device, for facilitating biometric enrollment of a user of a contactless smartcard including a biometric arrangement, and to a method of enrolling the user.

### Background of the Invention

Biometric arrangements are widely used as means for increasing the convenience and security of personal electronic devices, such as mobile phones etc. Fingerprint sensing arrangements, in particular, are now included in a large proportion of all newly released personal communication devices, such as mobile phones.

Lately, efforts have also been made to introduce biometric arrangements, such as fingerprint sensing arrangements, in other devices that may have less computing power and/or available energy. Examples of such other devices are so-called smartcards, door locks, and devices in the so-called internet of things (IoT) category etc.

It is, however, challenging to provide for secure, reliable, and convenient biometric enrollment of a user of such biometric arrangements. For instance, it may be desirable to guide the user during the enrollment, which is complicated by the fact that some devices with biometric arrangements may lack a user interface, or may have only rudimentary means for interacting with the user. For example, a biometrically enabled smartcard may typically have no user interface integrated in the smartcard.

For a contactless smartcard, US 2020/0327533 proposes to power and communicate with the smartcard during enrollment using the user's mobile device. To aid the user in correctly positioning the smartcard in relation to the mobile device, US 2020/0327533 discloses that a visual marker is displayed on the screen of the mobile device to guide the user to correctly arrange the smartcard on the backside of the mobile device during the enrollment procedure.

It appears to be potentially cumbersome for the user to press the smartcard against the backside of the mobile device, while attempting to enroll one or more fingers, and at the same time follow instructions and guidance provided on the display on the frontside of the mobile device.

It would therefore be desirable to provide for more user-friendly enrollment in a biometrically enabled contactless smartcard.

### Summary

In view of above-mentioned and other drawbacks of the prior art, it is an object of the present invention to provide for improved, in particular more user-friendly, enrollment in a biometrically enabled contactless smartcard.

According to a first aspect of the present invention, it is therefore provided an enrollment assistance device, for facilitating biometric enrollment of a user of a contactless smartcard including a biometric arrangement and a wireless power transfer arrangement, the enrollment assistance device comprising: a carrier having a first surface portion for arrangement of a user device including a wireless power transfer arrangement, and a second surface portion, spaced apart from the first surface portion, for arrangement of the contactless smartcard; and a first electrical conductor supported by the carrier and forming a first inductive coil at the first surface portion; a second electrical conductor supported by the carrier and forming a second inductive coil at the second surface portion; and a third electrical conductor supported by the carrier and forming a closed conductor encircling the first inductive coil and the second inductive coil, the third electrical conductor being configured to form a first inductive coupling to the first conductor spiral and a second inductive coupling to the second conductor spiral; the first inductive coil being configured to form a first wireless power transfer link with the wireless power transfer arrangement of the user device when the user device is arranged on the first surface portion of the carrier, and the second inductive coil being configured to form a second wireless power transfer link with the wireless power transfer arrangement of the contactless smartcard when the contactless smartcard is arranged on the second surface portion of the carrier.

It should be noted that the first, second and third electrical conductors provide for wireless coupling with both the user device and the contactless smartcard, and that this may be achieved without any conductor crossing in the enrollment assistance device. The first second and third electrical conductors are thus configured to enable communication and power transfer between the contactless smartcard and the user device. This will enable new alternatives for manufacturing of enrollment assistant devices using for example low-cost RFID-antenna manufacturing techniques.

The present invention is based upon the realization that enrollment in a biometrically enabled contactless smartcard can be improved by utilizing wireless power transfer from a user device and facilitating arrangement of the contactless smartcard in relation to the user device, so that the user is not required to actively hold the smartcard in relation to the user device during the enrollment procedure.

The present inventors have further realized that this can be achieved by providing an enrollment assistance device having a carrier and first and second inductive coils coupled by the third electrical conductor and supported by the carrier and being configured to form a first wireless power transfer link with a wireless power transfer arrangement of the user device when the user device is arranged on a first surface portion of the carrier, and a second wireless power transfer link with a wireless power transfer arrangement of the contactless smartcard when the contactless smartcard is arranged on a second surface portion of the carrier. Hereby, power can be transferred from the user device to the contactless smartcard via the first, second and third electrical conductors supported by the carrier.

Embodiments of the present invention allow the contactless smartcard and the user device to be arranged so that the user has easy access to a biometric sensor, such as a fingerprint sensor, on the smartcard during the entire enrollment procedure. In the event that the user device has a GUI (graphical user interface), the user can also be guided during the enrollment, using the GUI of the user device. This may provide for a shorter and more convenient enrollment procedure, and may also result in a higher quality of the enrolled biometric template.

Furthermore, the configuration with electrical conductors supported by the carrier and forming two inductive coils and a conductor enclosing the coils, provides the desired wireless power transfer without the need for any crossing conductors in the enrollment assistance device.

This in turn provides for the production of enrollment assistance devices which are relatively inexpensive and environmentally friendly, since there is no need for a battery or conventional cabling etc., and since there is no need for conductive connections between layers. In embodiments, the enrollment assistance device according to the present invention can be made as a single layer device, including a single conductor layer.

The enrollment assistance device according to embodiments of the present invention can be distributed to users together with, or separate from, a contactless smartcard with a biometric arrangement, with reduced cost and environmental impact.

According to an example embodiment, the first, second and third electrical conductors are arranged in the same plane, such as on the same surface of the carrier. The manufacturing of the enrollment assistance device is thereby simplified since all of the electrical conductors forming the wireless power transfer links can be made at the same time and at the same manufacturing step. Ease of manufacturing, which in turn provides the possibility of low-cost large scale production, is important for the described enrollment assistance device which thereby can be provided along with e.g. a biometric smartcard without significantly impacting the overall cost.

In embodiments, the enrollment assistance device may be provided in the form of a sheet having the electrical conductor forming the conductor spiral provided on, or embedded in, the sheet. The sheet may at least partly be made of paper.

The enrollment assistance device may, furthermore, be included in a biometric system, further comprising a contactless smartcard including a biometric arrangement and a wireless power transfer arrangement, wherein the contactless smartcard is arranged on the second surface portion of the carrier of the enrollment assistance device.

According to a second aspect of the present invention, there is provided a method of enrolling a user having the above-mentioned biometric system, and a user device including a wireless power transfer arrangement arranged to provide an electric field for power transfer adjacent to a backside of the user device, and a display arranged on a frontside of the user device, the method comprising the steps of: guiding the user to arrange the user device on the first surface portion of the carrier of the enrollment assistance device comprised in the biometric system, with the backside of the user device facing the first surface portion; transmitting, by the user device to the contactless smartcard arranged on the second surface portion of the carrier, a signal encoding an instruction to the contactless smartcard to start to perform biometric enrollment; and receiving, by the user device from the contactless smartcard arranged on the second surface portion of the carrier, after the biometric enrollment has been completed, a signal indicative of completion of the biometric enrollment.

In embodiments, the method may further comprise the steps of performing a user authentication using the user device; and allowing completion of the biometric enrollment only if the user authentication is successful.

The user authentication using the user device may, for example, involve inputting a password, a PIN, or an OTP to the user device, or performing biometric authentication using the user device. Following a successful authentication, the biometric enrollment functionality of the contactless smartcard may be unlocked by a signal provided by the user device to the contactless smartcard. Such a procedure is, per se, well-known to the person skilled in the relevant art.

Alternatively, enrollment in the contactless smartcard may be performed before the above-mentioned user authentication is carried out, and the contactless smartcard may be locked, or the enrolled biometric information may be erased if the subsequent user authentication fails or is not performed.

The method according to embodiments of the present invention may advantageously, at least partly, be carried out by a computer program (such as an app) that is run on the mobile user device. Such a computer program may, for example, be provided to the user by the party issuing the contactless smartcard. The contactless smartcard may, for example, be a dual interface smartcard.

In summary, the present invention thus relates to an enrollment assistance device comprising a carrier with a first surface portion for a user device, and a second surface portion for a contactless smartcard; first and second inductive coils supported by the carrier and overlapping the respective first surface portion and the second surface portion of the carrier. The first and second inductive coils are connected by the third electric conductor which together are configured to form a first wireless power transfer link with the wireless power transfer arrangement of the user device when the user device is arranged on the first surface portion of the carrier, and a second wireless power transfer link with the wireless power transfer arrangement of the contactless smartcard when the contactless smartcard is arranged on the second surface portion of the carrier.

### Brief Description of the Drawings

These and other aspects of the present invention will now be described in more detail, with reference to the appended drawings showing example embodiments of the invention, wherein:
Fig. 1A is an illustration of an exemplary biometrically enabled contactless smartcard;
Fig. 1B is a schematic view of the smartcard in Fig. 1A, when delaminated to reveal functional parts of the smartcard;
Fig. 2 is a schematic illustration of a biometric system, including an enrollment assistance device according to a first example embodiment of the present invention, with a user device and the contactless smartcard in Fig 1A arranged thereon;
Fig. 3 schematically shows the enrollment assistance device according to an example embodiment of the invention;
Fig. 4 schematically shows the enrollment assistance device according to an example embodiment of the invention; and
Fig. 5 is a flow-chart illustrating a method according to an example embodiment of the present invention.

### Detailed Description of Example Embodiments

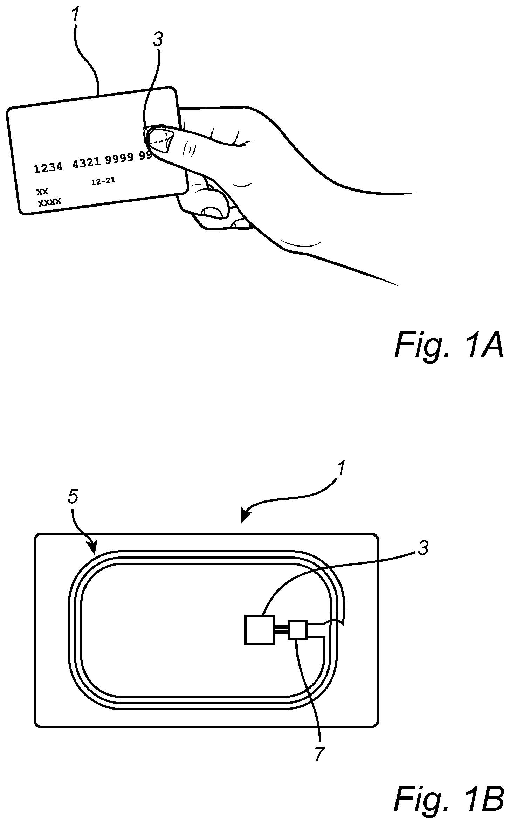

Fig. 1A schematically illustrates an exemplary contactless smartcard 1 including a biometric arrangement 3, here in the form of a fingerprint sensor module. The contactless smartcard 1 may, for example, be a biometrically enabled payment card, and payments may be authorized by biometrically authenticating the user, as is schematically indicated in Fig. 1A. Of course, a payment card such as that shown in Fig. 1A is not the only kind of biometrically enabled contactless smartcard for which embodiments of the present invention may be useful. Examples of other kinds of biometrically enabled contactless smartcards may include access cards, storage cards, identity cards, etc.

As is schematically shown in Fig. 1B, the smartcard 1 additionally comprises a wireless power transfer arrangement 5, and, in this particular embodiment, a secure element 7. The wireless power transfer arrangement 5 may be used for harvesting electrical power from a time-varying electrical field, and for wirelessly communicating with a remote device, such as a card reader (not shown), typically through load modulation. The secure element 7 may, for example, contain information for authorizing a transaction, and is connected to the biometric arrangement 3. When the user is authenticated by the biometric arrangement 3 (or by the biometric arrangement 3 in cooperation with the secure element 7), the information contained in the secure element 7 may be unlocked and allowed to be wirelessly communicated to the remote device via the wireless power transfer arrangement 5.

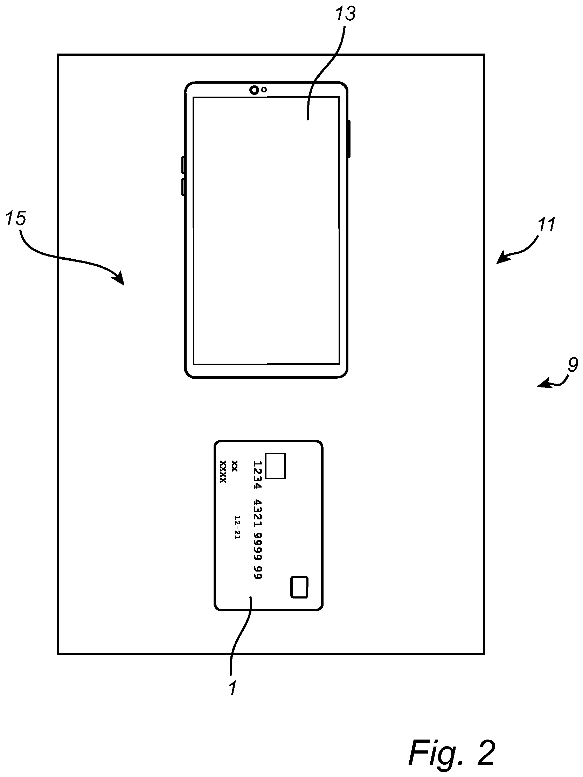

Fig. 2 is a schematic illustration of a biometric system 9, including an enrollment assistance device 11 according to an example embodiment of the present invention, and the contactless smartcard 1 in Fig. 1A arranged on, such as fixed on, a predefined second surface portion of the enrollment assistance device 11. In appearance, the biometric system 9 in Fig. 2 may be similar to the letter sent by an issuer of a smartcard to a user, but the enrollment assistance device 11 taking the place of an ordinary sheet of paper in such a letter can assist the user to effortlessly perform a biometric enrollment using the biometric arrangement 3 of the contactless smartcard 1. The contactless smartcard 1 may, for example, be fixed by a suitable adhesive, may be inserted in a sleeve comprised in the enrollment assistance device 11, or may be loosely arranged on the predefined second surface portion.

In Fig. 2, a user device 12 is indicated as being placed on a predefined location on the enrollment assistance device 11, for wirelessly powering the contactless smartcard 11 during the above-mentioned biometric enrollment.

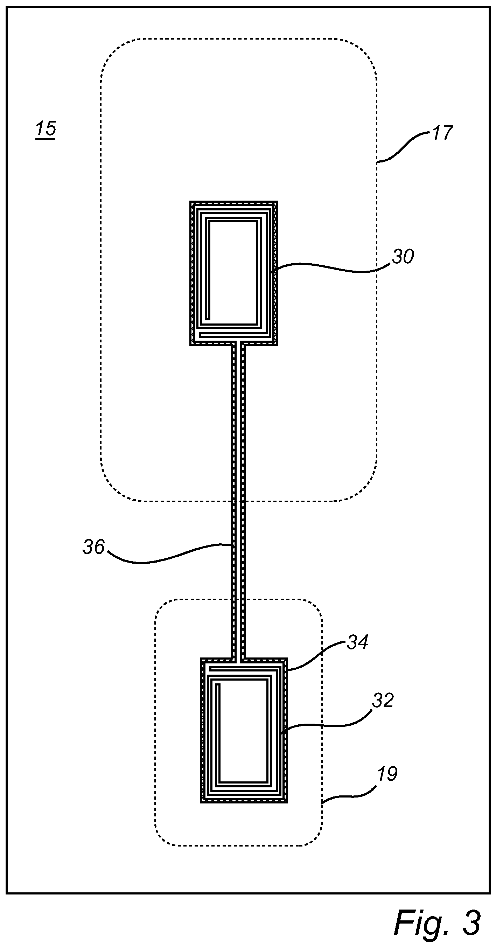

Fig. 3 schematically shows the enrollment assistance device according to the first example embodiment of the invention, without the user device and the contactless smartcard. The enrollment assistance device 11 comprises a carrier 15 having a first surface portion 17 and a second surface portion 19 spaced apart from the first surface portion 17. The first surface portion 17 is for arrangement of a user device 13, and the second surface portion 19 is for arrangement of a contactless smartcard 1. With continued reference to Fig. 3, the enrollment assistance device 11 further comprises a first electrical conductor 30 supported by the carrier 15 and forming a first inductive coil 32 in the form of a conductor spiral at the first surface portion 17 and a second inductive coil 32 in the form of a conductor spiral at the second surface portion 19.

The enrollment assistance device 11 further comprises a third electrical conductor 34 supported by the carrier 15 and forming a closed conductor 34 encircling the first inductive coil 30 and the second inductive coil 32. That the third electrical conductor 34 is closed conductor here means that it is arranged on the outside of and enclosing both of the first and second inductive coils 30, 32 without interruption in the conductor 34.

The third electrical conductor 34 is further arranged and configured to form a first inductive coupling to the first inductive coil 30 and a second inductive coupling to the second inductive coil 32.

An inductive coil is here an electromagnetic coil comprising closely spaced parallel windings, where the windings are not in physical contact with each other. Moreover, the described inductive coils are planar coils. The inductive coils 30, 32 together with the third electrical conductor 34 are herein configured to act as antennas for communication and power transfer between the contactless smartcard 1 and the user device 13.

Each of the first and second electrical conductor 30, 32 are continuous so that there is no interruption of the respective electrical conductor. Since the first surface portion 17 and second surface portion 19 are spaced apart from each other, the third electrical conductor 34 contain a substantially straight connection portion 36 reaching between the first surface portion 17 and second surface portion 19 to form an electrical connection between the first and second area portion 17, 19.

The first inductive coil 30 together with the part of the third electrical conductor located in the first area portion 17 is configured to form a first wireless power transfer link with the wireless power transfer arrangement of the user device 13 when the user device 13 is arranged on the first surface portion 17 of the carrier 15. Correspondingly, second inductive coil 32 together with the part of the third electrical conductor located in the second area portion 19 is configured to form a second wireless power transfer link with the wireless power transfer arrangement of the contactless smartcard 1 when the contactless smartcard 1 is arranged on the second surface portion 19 of the carrier.

The physical design first second and third electrical conductors 30, 32, 34 describing parameters such as wire widths, lengths, distances between the wires and size of coil pattern, are optimized to maximize the power transfer of the total system from the user device 13 to the smartcard 1 by considering the two coupled inductive coils 30, 32 (i.e. antennas) in combination. This is done at a frequency specified by the NFC standard.

Although the first and second inductive coils 30, 32 are schematically indicated in Fig. 3 as being generally rectangular, it should be noted that this need not be the case, and that the inductive coils 30, 32 may have a different outline, such as elliptical, etc. The carrier 15 may advantageously be cellulose-based, for minimum environmental impact, but could alternatively, or in combination, be made of a plastic material, which may be recycled and/or manufactured without the use of fossil material.

As is also illustrated in Fig. 3, the first, second and third electrical conductors 30, 32, 34 do not cross each other, thereby making it possible to arrange the first4, second and third electrical conductors 30, 32, 34 in the same plane on a surface of the carrier. The entire circuit illustrated in Fig. 3 can thereby be formed in the same manufacturing step. The carrier may however comprise additional layers such as a dielectric or plastic layer for protecting the electrical conductors so that the electrical conductors become embedded in the carrier.

The first, second and third electrical conductors 30, 32, 34 may be printed using conductive ink or paste using per se known techniques such as patterning of a metal foil used to form low-cost RFID-tags. Alternatively, the first, second and third electrical conductors 30, 32, 34 may be pre-formed on a sticker, which may be attached to the carrier 15. The first, second and third electrical conductors 30, 32, 34 may be covered by a dielectric layer, such as a thin plastic layer.

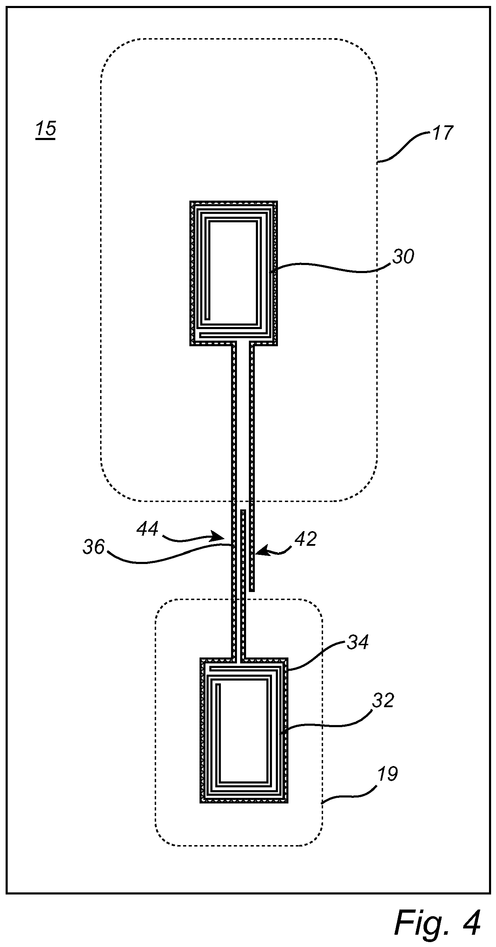

Fig. 4 schematically illustrates an example embodiment where the third electrical conductor 34 is an open conductor having overlapping end portions 42, 44. The overlapping end portions 42, 44 are arranged and configured so that there is a capacitive coupling between the first end portion 42 and the second end portion 42. It is thereby not required that the third electrical conductor 34 is a closed conductor if a capacitive coupling as illustrated in Fig. 4 can be achieved. Thereby, the third conductor 36 can for example be formed from a single wire placed on or embedded in the carrier 15. Moreover, the illustrated example shows one overlapping portion, but it would in principle be possible to have two or more overlapping portions as long as there is a capacitive coupling between the overlapping portions. However, losses in the circuit would most likely increase with the number of overlapping portions and from a performance perspective it would be preferable to use a closed conductor, but taking manufacturing concerns into account, one or more overlapping portions may provide a reasonable trade-off. It should be noted that in the present context, the overlapping portions 42, 44 are still arranged in the same plane, and the overlap is thus in the plane of the carrier 15. In other words, the overlapping portions 42, 44 are arranged adjacent to each other in the plane of the carrier 15.

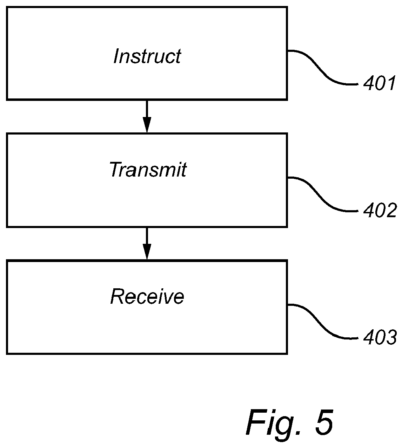

A method according to an embodiment of the present invention will now be described with reference to the flow-chart in Fig. 5, and with additional reference to other figures as indicated. When the method is carried out, the user has a biometric system 9 such as that described above with reference to Figs. 2, 3 and 4. The biometric system 9, including the enrollment assistance device 11 and the contactless smartcard 1 arranged on the second surface portion 19 of the carrier 15 may have been sent to the user by mail from the issuer of the card, such as a financial institution or the like. The user is also in possession of a user device 13, such as a mobile phone or tablet, including a wireless power transfer arrangement arranged to provide an electric field for power transfer adjacent to a backside of the mobile user device, and a display arranged on a frontside of the user device 13.

In a first step 501, the user is instructed to arrange the user device 13 on the first surface portion 17 of the carrier 15 of the enrollment assistance device 11 comprised in the biometric system 9, with the backside of the user device 13 facing the first surface portion 17. The instructing step may include providing guidance to the user. Such guidance may, for example, be included in the biometric system 9 that is provided to the user. For instance, written and/or graphical guidance may be printed on the carrier 15. As was mentioned above, such graphical guidance may include outlines of popular mobile phones, etc.

Alternatively, the user may be guided by controlling the user device 13 to provide an alignment pattern on the display of the mobile user device 13. The alignment pattern on the display may be aligned with the at least one indicium on the carrier 15.

In the subsequent step 502, the user device 13 transmits, to the contactless smartcard 1, a signal encoding an instruction to the contactless smartcard 1 to start to perform biometric enrollment. The signal is transmitted wirelessly to the contactless smartcard 1, and may be transmitted, using per se known techniques for near field communication (NFC), transmitted via the inductive coils 30, 32 comprised in the enrollment assistance device 11. Alternatively, this signal may be wirelessly transmitted using another wireless communication link, such as using low-power radio transmission.

During the enrollment procedure, the user may be guided by instructions and/or illustrations provided on the display of the user device 13. Such instructions and/or illustrations may be based on information provided wirelessly from the contactless smartcard 1 to the mobile user device 13. For instance, the user may be instructed in respect of finger placement and/or receive information about the status of the enrollment procedure.

When the enrollment procedure has been completed, as determined by the biometric arrangement 3 of the contactless smartcard 1, the user device 13 receives, in step 503, a signal indicating that the enrollment has been completed. The signal indicating that the enrollment has been completed may be received via the first and second inductive coils 30, 32 comprised in the enrollment assistance device 11.

In embodiments, the ability to successfully finalize the enrollment and enable use of the biometric capabilities of the contactless smartcard 1 may be conditional on a user authentication performed using the user device 13. This may particularly be the case for a so-called initial enrollment, where no biometric template is stored on the smartcard. In such embodiments, the user device 13 may locally carry out the user authentication, for example using a fingerprint sensor or other biometric arrangement comprised in the user device 13. Alternatively, the user device 13 may be used as an input device for input of a code, such as a password, PIN or OTP, for transmission to a remote server for authentication there.

In embodiments, the signal encoding a (correct) instruction to the contactless smartcard 1 to start to perform the enrollment may only be sent if a successful user authentication has first been performed. In other embodiments, the enrollment may be carried out, but the generated biometric template may be discarded, or the biometric capabilities of the smartcard 1 may be locked unless a successful user authentication is performed.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An enrollment assistance device (11), for facilitating biometric enrollment of a user of a contactless smartcard (1) including a biometric arrangement (3) and a wireless power transfer arrangement, the enrollment assistance device comprising:
a carrier (15) having a first surface portion (17) for arrangement of a user device (13) including a wireless power transfer arrangement, and a second surface portion (19), spaced apart from the first surface portion, for arrangement of the contactless smartcard;
a first electrical conductor supported by the carrier and forming a first inductive coil (30) at the first surface portion;
a second electrical conductor supported by the carrier and forming a second inductive coil (32) at the second surface portion; and
a third electrical conductor supported by the carrier and forming a conductor (34) encircling the first inductive coil (30) and the second inductive coil (32), the third electrical conductor being configured to form a first inductive coupling to the first conductor spiral and a second inductive coupling to the second conductor spiral;
the first inductive coil being configured to form a first wireless power transfer link with the wireless power transfer arrangement of the user device when the user device is arranged on the first surface portion of the carrier, and the second inductive coil being configured to form a second wireless power transfer link with the wireless power transfer arrangement of the contactless smartcard when the contactless smartcard is arranged on the second surface portion of the carrier.

2. The enrollment assistance device according to claim 1, wherein the first, second and third electrical conductors are arranged in the same plane.

3. The enrollment assistance device according to claim 1 or 2, wherein the first second and third electrical conductors are arranged on a surface of the carrier.

4. The enrollment assistance device according to any one of the preceding claims, wherein the third electrical conductor is configured to form a closed conductor loop.

5. The enrollment assistance device according to any one of claims 1 to 3, wherein the third electrical conductor is configured to form an open conductor loop having overlapping end portions, and wherein the overlapping end portions are arranged to form a capacitive coupling therebetween.

6. The enrollment assistance device according to any one of the preceding claims, wherein the first and second electrical conductors are printed on the carrier.

7. The enrollment assistance device according to any one of the preceding claims, wherein the first, second and third electrical conductors are embedded in the carrier.

8. The enrollment assistance device according to any one of the preceding claims, wherein the carrier is provided in the form of a sheet.

9. A biometric system comprising:
the enrollment assistance device according to any one of the preceding claims; and
a contactless smartcard (1) including a biometric arrangement and a wireless power transfer arrangement.

10. The biometric system according to claim 9, wherein the contactless smartcard is arranged on the second surface portion of the carrier of the enrollment assistance device.

11. The biometric system according to claim 9, wherein the contactless smartcard is attached to the second surface portion of the carrier of the enrollment assistance device.

12. A method of enrolling a user having the biometric system according to any one of claims 9 to 11, and a user device including a wireless power transfer arrangement arranged to provide an electric field for power transfer adjacent to a backside of the user device, and a display arranged on a frontside of the user device, the method comprising the steps of:
guiding (501) the user to arrange the user device on the first surface portion of the carrier of the enrollment assistance device comprised in the biometric system, with the backside of the user device facing the first surface portion;
transmitting (502), by the user device to the contactless smartcard arranged on the second surface portion of the carrier, a signal encoding an instruction to the contactless smartcard to start to perform biometric enrollment; and
receiving (503), by the user device from the contactless smartcard arranged on the second surface portion of the carrier, after the biometric enrollment has been completed, a signal indicative of completion of the biometric enrollment.

13. The method according to claim 12, wherein:
the signal encoding an instruction to the contactless smartcard to start to perform biometric enrollment is transmitted to the contactless smartcard via the second inductive coil comprised in the enrollment assistance device included in the biometric system; and
the signal indicative of completion of the biometric enrollment is received by the user device via the first inductive coil comprised in the enrollment assistance device included in the biometric system.

14. The method according to claim 12 or 13, further comprising the steps of:
performing a user authentication using the user device; and
allowing completion of the biometric enrollment only if the user authentication is successful.

15. A computer program configured to, when run on a user device including a wireless power transfer arrangement on a backside of the user device and a display on a frontside of the user device, cause the user device to carry out the steps according to any one of claims 12 to 14.
